# EUROPÄISCHE PATENTSCHRIFT

(11) **EP 0 775 672 B1**
(45) Veröffentlichungstag und Bekanntmachung des Hinweises auf die Patenterteilung: **01.09.1999**
(21) Anmeldenummer: 96203257.9
(22) Anmeldetag: 20.11.1996
(51) Int. Cl.: C03B 19/06, C03B 19/04, C03B 23/049, B28B 1/20, B28B 11/00

(54) **Verfahren zur Herstellung eines flachen, glasartigen oder keramischen Formkörpers mit strukturierter Oberfläche**
Process for producing a flat, glasslike or ceramic shaped article of structured surface
Procédé de fabrication d'un corps moulé plat, vitreux ou en céramique, à surface structurée

(30) Priorität: 25.11.1995 DE 19543985
(43) Veröffentlichungstag der Anmeldung: 28.05.1997
(73) Patentinhaber: Philips Patentverwaltung GmbH, 22335 Hamburg (DE); Koninklijke Philips Electronics N.V., 5621 BA Eindhoven (NL)
(72) Erfinder: Hermann, Wilhelm, Dr. rer.nat., Röntgenstrasse 24, 22335 Hamburg (DE); Jungk, Hans, Röntgenstrasse 24, 22335 Hamburg (DE)
(74) Vertreter: Schmalz, Günther, Dipl.-Ing.

(56) Entgegenhaltungen:
- EP-A- 0 123 191
- EP-A- 0 138 307
- EP-A- 0 276 886
- GB-A- 268 101
- EUROPEAN CONFERENCE ON OPTICAL COMMUNICATION, BRIGHTON, SEPT. 11 - 15, 1988, Bd. PART 1, Nr. CONF. 14, 11.September 1988, INSTITUTION OF ELECTRICAL ENGINEERS, Seiten 449-452, XP000145164 BACHMANN P ET AL: "PREPARATION OF QUARTZ TUBES BY CENTRIFUGATIONAL DEPOSITION OF SILICA PARTICLES"
- PATENT ABSTRACTS OF JAPAN vol. 17, no. 489 (C-1106), 6.September 1993 & JP-A-05 124828 (NIPPON STEEL CHEM. CO., LTD.), 21.Mai 1993,
- PATENT ABSTRACTS OF JAPAN vol. 13, no. 461 (C-645), 18.Oktober 1989 & JP-A-01 179748 (KUBOTA LTD.), 17.Juli 1989,
- PATENT ABSTRACTS OF JAPAN vol. 9, no. 175 (C-292), 19.Juli 1985 & JP-A-60 046933 (SUWA SEIKOSHA CO., LTD.), 14.März 1985,
- PATENT ABSTRACTS OF JAPAN vol. 14, no. 275 (C-728), 14.Juni 1990 & JP-A-02 083226 (SEIKO EPSON CORP.), 23.März 1990,
- PATENT ABSTRACTS OF JAPAN vol. 17, no. 11 (C-1015), 8.Januar 1993 & JP-A-04 240134 (RICOH CO., LTD.), 27.August 1992,

## Beschreibung

Die Erfindung betrifft ein Verfahren Zur Herstellung eines flachen, glasartigen oder keramischen Formkörpers mit strukturierter Oberfläche.

Es ist bekannt, daß glasartige oder keramische Formkörper aus einer Suspension eines feinverteilten, pulverkeramischen Werkstoffes hergestellt werden können. Dabei wird zunächst ein feuchter und noch formbarer Grünkörper hergestellt, der erst beim anschließenden Trocknen und Sintern in den gebrauchsfertigen Endzustand übergeführt wird. Diese Verfahrensweise hat den Vorteil, daß die Formgebung bei Raumtemperatur erfolgt. Damit der beim Trocknen und Sintern auftretende Schrumpf möglichst klein bleibt, strebt man möglichst hohe Feststoffgehalte im vorverdichteten Grünkörper an.

In der deutschen Offenlegungsschrift 37 02 025 ist bereits die Herstellung von rotationssymmetrischen, porösen Festkörpern hoher relativer Dichte aus einer verdünnten Suspension beschrieben, die als pulverkeramischen Werkstoff SiO₂ Partikel enthält, wobei man durch Zentrifugieren in einer Hohlform aufeinanderfolgend dünne Schichten von Feststoffpartikeln mit Hilfe von Zentrifugalkräften abscheidet. Die dabei entstehenden Formkörper haben eine röhrenförmige Geometrie.

Es ist auch schon vorgeschlagen worden, den durch das vorstehend beschriebene Rotationsverfahren hergestellten Grünkörper dadurch weiter zu verdichten, daß man ihn einer Ultraschallverflüssigung und einem nochmaligen Zentrifugieren unterwirft. Dadurch läßt sich ein zweiter, wesentlich stärker verdichteter, feuchter Grünkörper herstellen, dessen Feststoffgehalt sich durch Wiederholung der genannten Nachverdichtungsschritte noch weiter erhöhen läßt.

Für viele Anwendungen werden jedoch flache, glasartige oder keramische Formteile benötigt, die eine dem jeweiligen Anwendungszweck angepaßte Strukturierung aufweisen. Wird bspw. eine Quarzglasscheibe benötigt, die ein bestimmtes Oberflächenprofil oder Löcher aufweist, dann müssen spezielle Ätz- oder Bohrverfahren mit den dazugehörigen aufwendigen Werkzeugen eingesetzt werden. Derartige Flachgläser werden z.B. für flache Bildschirme, für Druckköpfe (Bubble Jet, Ink Jet), für thermisch hochbelastbare, optische Filter, aber auch für Mikrolinsen benötigt.

Es stellte sich deshalb die Aufgabe, ein Verfahren zur Herstellung von großformatigen, homogenen, hochreinen, strukturierten flachen Formkörpern, insbesondere zur Herstellung von Quarzglasscheiben für Bildschirme zu entwickeln.

Gelöst wird diese Aufgabe durch ein Verfahren zur Herstellung eines flachen, glasartigen oder keramischen Formkörpers mit strukturierter Oberfläche, bei dem man aus einer Supension eines hochdispersen, pulverförmigen Feststoffes und eines Dispergiermittels durch Zentrifugieren in einer Hohlform einen rotationssymetrischen, feuchten Grünkörper herstellt, diesen nach Entnahme aus der Hohlform aufschneidet, auf einer strukturgebenden Unterlage ausbreitet, durch Druckanwendung eine Oberflächenprägung durchführt und dann durch Trocknung und Sinterung den glasartigen oder keramischen Formkörper erzeugt.

Für das erfindungsgemäße Verfahren verwendet man als hochdispersen, pulverförmigen Feststoff je nach Zielsetzung nanoamorphe und/oder nanokristalline, monokomponentige oder mehrkomponentige, ein- oder mehrphasige Materialien. Der Feststoff kann z.B. aus SiO₂ oder Al₂O₃ als einziger Komponente bestehen, er kann aber auch mehrere Komponenten enthalten. Dabei kann der Feststoff entweder als eine mehrphasige Mischung von Al₂O₃ und SiO₂ eingesetzt werden, er kann jedoch auch als eine einphasige feste Lösung von Al₂O₃ in SiO₂ oder von SiO₂ in Al₂O₃ zur Anwendung kommen.

Für die Herstellung von Formkörpern aus Quarzglas (Kieselsäureglas) kann man von handelsüblichen Pulvern aus pyrogener Kieselsäure ausgehen. Bei der Herstellung von Mischsilikatgläsern, z.B. Borosilikatgläsern empfiehlt es sich, wegen der hohen Reaktivität des B₂O₃ mit Wasser nicht von den getrennt nebeneinander liegenden Oxiden des Bors und des Siliziums auszugehen, sondern ein Mischoxid, bestehend aus einer festen Lösung von B₂O₃ in SiO₂ als Ausgangsmaterial zu verwenden. Für die genannten Materialzusammensetzungen sind Verfahren bekannt, die die Herstellung submikroskopischer Teilchen, vorzugsweise nanoskaliger Partikel ermöglichen. Gebräuchliche Methoden sind die Flammenhydrolyse, die Laserpyrolyse, das plasmaaktivierte CVD (chemical vapor deposition)-Verfahren, die Laserablation und die Spraypyrolyse.

Der hochdisperse, pulverförmige Feststoff soll eine Partikelgröße unter einem µm, vorzugsweise unter 50 nm und einen mittleren Partikeldurchmesser von etwa 40 nm bei einer spezifischen Oberfläche von 40 - 60 m²/g aufweisen. Neben der Feinheit der verwendeten Materialien ist auch die Art des Dispergiermittels von großer Bedeutung für eine erfolgreiche Durchführung des erfindungsgemäßen Verfahrens. Bei Verwendung von pyrogener Kieselsäure als Ausgangsmaterial eignet sich reines destilliertes Wasser hervorragend als Dispergiermittel. Zusätze von Bindern wie Polyvinylalkohol (® Moviol) erhöhen die Festigkeit des Grünkörpers in der Trocknungsphase. Weichmacher wie Glyzerin oder Triäthylenglykol können der Suspension zugesetzt werden, um die Formbarkeit des feuchten Grünkörpers zu erhöhen. Allerdings müssen diese Zusatzstoffe nach dem Trockenprozeß aus dem Grünkörper wieder entfernt werden, z.B. durch Erhitzung in einem Ofen im strömenden Sauerstoff. Nach dem Abbau des Binders empfiehlt sich außerdem auch noch ein Reinigungsschritt in chlorhaltiger Atmospäre, bei dem Verunreinigungen an der Oberfläche, aber auch im Volumen des Grünkörpers vor der Sinterung entfernt werden.

In dem erfindungsgemäßen Verfahren wird eine Suspension eingesetzt, die ein Gewichtsverhältnis Feststoff: Dispergiermittel von 1 : 50 bis 1 : 5 aufweist, aus der durch Zentrifugieren ein erster feuchter Grünkörper mit einem Festkörpergehalt von etwa 30 bis 38 Vol. % hergestellt wird. Dabei werden entsprechend dem Verfahren der deutschen Offenlegungsschrift 37 02 025 in einer Hohlform durch verlegende Zentrifugation dünne Feststoffschichten nacheinander ohne Unterbrechung des Zentrifugierens abgeschieden und die überschüssige Restsuspension aus der Hohlform in der Weise abgeführt, daß immer eine dünne Schicht der Restsuspension auf dem abgelagerten Feststoff erhalten bleibt.

Der so hergestellte feuchte Grünkörper erfährt nun allerdings bis zur Kompaktierung durch Trocknen und Sintern noch einen linearen Schrumpf von bis zu 30%. Damit ist die Gefahr unerwünschter Rißbildungen verbunden. Besonders kritisch ist dieser Trocknungsschrumpf, der in der Form auftritt und durch ein noch nicht vollständiges oder durchgehendes Festkörpergerüst hervorgerufen wird, bei kompliziert strukturierten Grünkörpern, weil Rißbildungen auftreten, wenn die Grünkörpermasse an der Form haftet und/oder während der Trocknung ein Aufschrumpfen auf die Form nicht vermieden werden kann.

Es hat sich deshalb als vorteilhaft erwiesen, den ersten, noch feuchten Grünkörper einer Ultraschallverflüssigung und einem nochmaligen Zentrifugieren zu unterwerfen und dann einen stärker verdichteten Grünkörper zu bilden, aus dem nach erneuter Ultraschallverflüssigung und Zentrifugierung stufenweise Grünkörper mit einem Feststoffgehalt von bis zu 50 Vol. % gebildet werden können. So läßt sich eine hohe Nachverdichtung erreichen, die den Trockungsschrumpf praktisch völlig unterdrückt und die Bildung rißfreier Formkörper ermöglicht.

Die zur Bildung des rohrförmigen Grünkörpers verwendete Hohlform sollte zweckmäßigerweise in zwei oder mehrere Formteile zerlegt werden können, um den Grünkörper leicht entnehmen zu können. Es ist zweckmäßig, die Formteile der Hohlform aus einem geeigneten Kunststoff herzustellen.

Zur Herstellung eines flachen, glasartigen oder keramischen Formkörpers mit strukturierter Oberfläche wird der Grünkörper nach Entnahme aus der Hohlform entlang einer Mantellinie aufgeschnitten und zwischen Polyäthylenfolien plangebogen. Durch Anwendung von Walzendruck kann die Dicke der Grünkörperplatte stufenweise so weit reduziert werden, bis die gewünschte Dicke erreicht ist. Dann wird die Grünkörperplatte, deren beide Oberflächen zunächst noch glatt sind, auf einer form- gebenden Unterlage ausgebreitet und durch Walzen, Prägen, Pressen oder Stanzen die gewünschte Oberflächenstruktur einschließlich möglicherweise auch erforderlicher Löcher gebildet. Die feuchte Grünkörperplatte kann auch zwischen eine obere und untere formgebende Fläche gelegt und durch Druckanwendung eine beidseitige Oberflächenstrukturierung vorgenommen werden.

Es ist auch möglich, die Oberflächenstrukturierung des Grünkörpers bereits durch die formgebende Innenfläche der Hohlform, in der der Grünkörper gebildet wird, festzulegen. Falls der flachgelegte Grünkörper aufgrund eines Erinnerungseffekts die Tendenz zeigt, in die zylindrische Geometrie des Hohlkörpers zurückzukehren, kann dem durch eine kombinierte Einwirkung von Wärme (Mikrowellenaufheizung) und Ultraschall wirksam entgegengetreten werden.

Nach Beendigung der Formgebung erfolgt die Trocknung des Grünkörpers bei Raumtemperatur, bspw. auf einem aufgespannten Nylongewebe, in wenigen Stunden an der Luft. Anschließend wird dann die Sinterung des Grünkörpers zu Quarzglas isotherm im Vakuum oder in einer Heliumatmosphäre bei Temperaturen zwischen 1300 und 1500° C durchgeführt. Die so hergestellten Quarzglasplatten sind blasenfrei, streuzentrenfrei und zeigen keinerlei Verrundungen an scharfkantigen Details der Formgebung.

Das erfindungsgemäße Verfahren bietet vielfältige Möglichkeiten, das Quarzglas mit einer geeigneten Dotierung zur Modifizierung der Quarzglaseigenschaften zu versehen. Diese Dotierung muß nicht notwendigerweise in Richtung der Plattendicke homogen sein, sondern kann einen Gradienten aufweisen oder kann schichtweise unterschiedlich sein, da die Abscheidung in der Zentrifuge schichtweise erfolgt. Die Dotierung kann so vorgenommen werden, daß der Suspension ein feinteiliges Metalloxidpulver oder eine Mischung aus mehreren Metalloxiden zugesetzt wird. Ein anderes Dotierungsverfahren besteht darin, daß vor dem Sinterschritt der Grünkörper mit der Lösung eines Metall-Propylats oder Metall-Hydrolysats getränkt wird.

Die nach dem erfindungsgemäßen Verfahren hergestellten flachen, glasartigen Formkörper mit strukturierter Oberfläche werden für Druckköpfe (Bubble Jet, Ink Jet), flache Bildschirme, thermisch hochbelastbare optische Filter und für Mikrolinsen eingesetzt.

### Beispiel

Aus 200 g feinverteilter pyrogener Kieselsäure der Firma Degussa (Produktbezeichnung ®Aerosil OX50) mit einer spezifischen Oberfläche von 50 m²/g wurde durch Dispergierung in 1800g Wasser unter einstündigem Rühren und Kühlung auf 20° C im Ultraschallbad eine Suspension hergestellt. Diese Suspension wurde zu einer wässrigen Polyvinylazetatlösung gegeben, die in 100 ml 5g Polyvinylazetat enthielt. Der pH-Wert der Mischung wurde durch Zugabe von Triäthanolamin auf etwa 7 eingestellt und noch eine weitere Stunde dispergiert. Dann wurden 5% Glyzerin, bezogen auf den Gehalt an Aerosil OX50 zugegeben. Diese Mischung wurde zur Abtrennung von gröberen Bestandteilen einer Vorzentrifugierung bei 20 000 U/min. bei einem Durchsatz von 4 ml/sec. unterworfen.

Die so erhaltene Suspension wurde dann bei 30 000 U/min. zur Herstellung eines rohrförmigen Grünkörpers in einen Stahlrotor durch verlegende Zentrifugation eingeführt. Der Stahlrotor enthielt eine in zwei Formteile zerlegbare Hohlform, in die eine kunststoffbeschichtete Aluminiumfolie eingelegt war. Die Abscheideseite der Folie war mit Silikonfett behandelt, um ein leichtes Ablösen der Abscheidung von der Folie zu gewährleisten. Nach dem eigentlichen Abscheidungsprozeß wurde die Abscheidung noch weitere zwei Minuten bei 30 000 U/min. verdichtet.

Nach Beendigung der Abscheidung wurde die Hohlform dem Stahlrotor entnommen, geöffnet und der Grünkörper mit der Folie aus der Form entnommen. Der rohrförmige Grünkörper wurde entlang einer Mantellinie aufgeschnitten und zwischen Polyäthylenfolien plangebogen.

Zur Herstellung einer Platte von 85 x 170 mm wurde der Grünkörper zwischen den Polyäthylenfolien so lange gewalzt, bis die gewünschte Dicke erhalten worden war. Die erhaltende Platte wurde dann durch Aufpressen auf einen Formkörper strukturiert, wobei vorher die Polyäthlenfolie von der zu prägenden Oberfläche des Grünkörpers entfernt wurde.

Die nun detailgetreu strukturierte Grünkörperplatte wurde bei Raumtemperatur auf einem aufgespannten Nylongewebe in wenigen Stunden an der Luft getrocknet. Danach wurde der Binder mit Hilfe eines Standardverfahrens in zwei Schritten entfernt:

Es wurde zunächst zehn Stunden lang auf 500° C in einem Stickstoffstrom von 0,5 l/min. und anschließend zwei Stunden lang in einem Sauerstoffstrom von 0,5 l/min. bei 550 ° C erhitzt.

Anschließend wurde zur Entfernung von OH-Gruppen und Verbindungen der Nebengruppenelemente ein Standard-Reinigungsverfahren eingesetzt, bei dem zunächst zwei Stunden lang eine Mischung von Sauerstoff und Thionylchlorid in einer Menge von 05 l/min. und eine Temperatur von 400° C angewendet wurde. Bei diesem Verfahren wurde im ständigen Wechsel 10 min. Normaldruck und dann durch Abpumpen eine Minute lang ein Druck von nur 20 - 100 Millibar erzeugt. Nach Ablauf der ersten zwei Stunden wurde das Verfahren bei einer Temperatur von 1100°C zwei weitere Stunden fortgesetzt.

Anschließend erfolgte die Sinterung isotherm in einer Vakuumsinteranlage bei 1500° C.

## Patentansprüche

1. Verfahren zur Herstellung eines flachen, glasartigen oder keramischen Formkörpers mit strukturierter Oberfläche, wobei aus einer Suspension eines hochdispersen, pulverförmigen Feststoffes und eines Dispergiermittels durch Zentrifugieren in einer Hohlform ein rotationssymmetrischer, feuchter Grünkörper hergestellt wird, dieser nach Entnahme aus der Hohlform aufgeschnitten und gegebenenfalls ausgewalzt, auf einer strukturgebenden Unterlage ausgebreitet, durch Druckanwendung eine Oberflächenprägung durchgeführt und dann durch Trocknung und Sinterung der glasartige oder keramische Formkörper erzeugt wird.

2. Verfahren nach Anspruch 1,
dadurch gekennzeichnet,
daß ein nur aus einer Komponente bestehender Feststoff eingesetzt wird.

3. Verfahren nach Anspruch 1,
dadurch gekennzeichnet,
daß als Feststoff SiO₂ oder Al₂O₃ eingesetzt werden.

4. Verfahren nach Anspruch 1,
dadurch gekennzeichnet,
daß ein aus mehreren Komponenten bestehender Feststoff eingesetzt wird.

5. Verfahren nach Anspruch 4,
dadurch gekennzeichnet,
daß als Feststoff eine mehrphasige Mischung aus Al₂O₃ und SiO₂ eingesetzt wird.

6. Verfahren nach Anspruch 4,
dadurch gekennzeichnet,
daß als Feststoff eine einphasige Lösung von Al₂O₃ in SiO₂ oder von SiO₂ in Al₂O₃ eingesetzt wird.

7. Verfahren nach Anspruch 1,
dadurch gekennzeichnet,
daß in der Suspension als Feststoff ein hochdisperses Material mit einer Partikelgröße unter 1 µm, vorzugsweise unter 50 nm und mit einem mittleren Partikeldurchmesser von etwa 40 nm eingesetzt wird.

8. Verfahren nach Anspruch 1,
dadurch gekennzeichnet,
daß als Dispergiermittel destilliertes Wasser eingesetzt wird.

9. Verfahren nach Anspruch 1,
dadurch gekennzeichnet,
daß der durch Zentrifugieren in der Hohlform gebildete feuchte Grünkörper durch Ultraschallverflüssigung und nochmaliges Zentrifugieren nachverdichtet wird.

10. Verfahren nach Anspruch 9,
dadurch gekennzeichnet,
daß die Nachverdichtung des feuchten Grünkörpers durch Ultraschallverflüssigung und Zentrifugieren mehrmals nacheinander durchgeführt wird.

11. Verfahren nach Anspruch 1,
dadurch gekennzeichnet,
daß die Hohlform in zwei oder mehrere Formteile zerlegt werden kann.

12. Verfahren nach Anspruch 1,
dadurch gekennzeichnet,
daß die Oberflächenstrukturierung des feuchten Grünkörpers auf einer formgebenden Unterlage durch Walzen, Pressen, Prägen oder Stanzen erfolgt.

13. Verfahren nach Anspruch 12,
dadurch gekennzeichnet,
daß der feuchte Grünkörper zwischen eine obere und eine untere formgebende Fläche gelegt und durch Druckanwendung eine beiderseitige Oberflächenstrukturierung erfolgt.

14. Verfahren nach Anspruch 1,
dadurch gekennzeichnet,
daß die Oberflächenstrukturierung des Grünkörpers einseitig bereits durch die formgebende Innenfläche der Hohlform festgelegt wird.

15. Verfahren nach Anspruch 1,
dadurch gekennzeichnet,
daß man der Suspension ein Dotierungsmittel zusetzt.

16. Verfahren nach Anspruch 1,
dadurch gekennzeichnet,
daß man den auf der strukturgebenden Unterlage ausgebreiteten feuchten Grünkörper vor der Trocknung und/oder Sinterung mit einem Dotierungsmittel prägt.

## Claims

1. A method of manufacturing a flat, glass-like or ceramic moulding having a structured surface, wherein a rotationally symmetrical, moist green body is manufactured from a suspension of a highly dispersed, powdered solid material and a dispersing agent by centrifuging in a hollow mould, whereafter said green body is removed from the hollow mould and, subsequently, cut up and, if necessary, rolled out, after which it is spread out on a structure-imparting substrate, the surface is embossed by applying pressure and, subsequently, the glass-like or ceramic moulded body is produced by drying and sintering.

2. A method as claimed in Claim 1, characterized in that a solid is used which comprises only one component.

3. A method as claimed in Claim 1, characterized in that for the solid use is made of SiO₂ or Al₂O₃.

4. A method as claimed in Claim 1, characterized in that a solid is used which comprises a plurality of components.

5. A method as claimed in Claim 4, characterized in that a multi-phase mixture of Al₂O₃ and SiO₂ is used as the solid.

6. A method as claimed in Claim 4, characterized in that a single-phase solution of Al₂O₃ in SiO₂ or of SiO₂ in Al₂O₃ is used as the solid.

7. A method as claimed in Claim 1, characterized in that the solid which is introduced into the suspension is a highly dispersed material having a particle size below 1 µm, preferably below 50 nm, and an average particle diameter of approximately 40 nm.

8. A method as claimed in Claim 1, characterized in that distilled water is used as the dispersing agent.

9. A method as claimed in Claim 1, characterized in that the moist green body formed in the hollow mould by centrifuging is post-densified by ultrasonic liquefaction and renewed centrifuging.

10. A method as claimed in Claim 9, characterized in that post-densification of the moist green body by ultrasonic liquefaction and centrifuging is carried out a number of times in a row.

11. A method as claimed in Claim 1, characterized in that the hollow mould can be divided into two or more parts.

12. A method as claimed in Claim 1, characterized in that the surface of the moist green body is structured on a shape-imparting substrate by rolling, pressing, embossing or punching.

13. A method as claimed in Claim 12, characterized in that the moist green body is arranged between an upper and a lower shape-imparting surface, whereafter its surface is structured on both sides by applying pressure.

14. A method as claimed in Claim 1, characterized in that a structure is already imparted to one side of the surface of the green body by the shape-imparting inner surface of the hollow mould.

15. A method as claimed in Claim 1, characterized in that a dopant is added to the suspension.

16. A method as claimed in Claim 1, characterized in that prior to drying and/or sintering, the moist green body spread out on the structure-imparting substrate is provided with a dopant.

## Revendications

1. Procédé de fabrication d'un corps moulé plat vitreux ou céramique à surface structurée, un corps vert humide à symétrie de rotation étant fabriqué à partir d'une suspension d'une matière solide pulvérulente finement dispersée et d'un agent dispersant par centrifugation dans un moule creux, celui-ci étant découpé après démoulage du moule creux, étalé sur un fond structurant, une structure de surface étant estampée par application d'une pression et le corps moulé céramique ou vitreux étant produit par séchage et frittage.

2. Procédé selon la revendication 1,caractérisé en ce qu'une matière solide composée d'un seul composant est utilisé.

3. Procédé selon la revendication 1, caractérisé en ce que le SiO₂ ou l'Al₂O₃ est utilisé comme matière solide.

4. Procédé selon la revendication 1, caractérisé en ce qu'une matière solide constituée de plusieurs composants est utilisée.

5. Procédé selon la revendication 4, caractérisé en ce qu'un mélange en plusieurs phases d'Al₂O₃ et SiO₂ est utilisé comme matière solide.

6. Procédé selon la revendication 4, caractérisé en ce qu'une solution en une seule phase d'Al₂O₃ dans du SiO₂ ou de SiO₂ dans de l'Al₂O₃ est utilisée comme matière solide.

7. Procédé selon la revendication 1, caractérisé en ce qu'une matière en fine dispersion d'un diamètre des particules inférieur à 1 µm, de préférence inférieur à 50 nm et d'un diamètre des particules moyen d'environ 40 nm est utilisée comme matière solide dans la suspension.

8. Procédé selon la revendication 1, caractérisé en ce que de l'eau distillée est utilisée comme agent dispersant.

9. Procédé selon la revendication 1, caractérisé en ce que le corps vert humide formé par centrifugation dans le moule creux est compacté par fluidification aux ultra-sons et nouvelle centrifugation.

10. Procédé selon la revendication 9, caractérisé en ce que la densification du corps vert humide est effectuée par plusieurs fluidifications aux ultra-sons et centrifugations successives.

11. Procédé selon la revendication 1, caractérisé en ce que le moule creux peut être décomposé en deux parties de moule ou plus.

12. Procédé selon la revendication 1, caractérisé en ce que la structuration de surface du corps vert humide est effectuée sur un fond structurant par laminage, pression, estampage ou poinçonnage.

13. Procédé selon la revendication 12, caractérisé en ce que le corps vert humide est placé entre des surfaces structurantes supérieure et inférieure et, par application d'une pression, une structuration de surface bilatérale est appliquée.

14. Procédé selon la revendication 1, caractérisé en ce que la structuration de surface du corps vert est déjà déterminée unilatéralement par la surface interne structurante du moule creux.

15. Procédé selon la revendication 1, caractérisé en ce qu'un agent de dopage est ajouté à la suspension.

16. Procédé selon la revendication 1, caractérisé en ce que le corps vert humide étalé sur le fond structurant est imprégné d'un agent de dopage avant le séchage et/ou le frittage.
